# EUROPEAN PATENT APPLICATION

(11) **EP 3 406 747 A1**
(43) Date of publication of application: **28.11.2018**
(21) Application number: 16886478.3
(22) Date of filing: 02.12.2016
(51) Int. Cl.: C22C 38/00, B21J 5/00, C22C 38/46, C21D 8/06, C21D 9/28, C21D 9/30, F16C 3/06

(54) **HIGH STRENGTH FORGED STEEL AND LARGE FORGED COMPONENT**

(30) Priority: 19.01.2016 JP 2016008334
(71) Applicant: Kabushiki Kaisha Kobe Seiko Sho (Kobe Steel, Ltd.), Kobe-shi, Hyogo 651-8585 (JP)
(72) Inventor: TAKAOKA, Hiroyuki, Hyogo 676-8670 (JP)
(74) Representative: Müller-Boré & Partner Patentanwälte PartG mbB
(86) International application number: PCT/JP2016/085923
(87) International publication number: WO 2017/126239

(57) **Abstract**

The present invention relates to a high strength forged steel for use in producing a large forged product. The high strength forged steel comprises composition which comprises predetermined amounts of predetermined chemical elements and a balance being Fe and inevitable purities. A major constituent of a metallographic structure of the high strength forged steel comprises bainite, martensite or a combination thereof. An average crystal grain size in steel microstructures between a near-surface level and a mid level is less than or equal to 50 µm. The near-surface level is below a surface of the high strength forged steel at a distance of 5 mm and the mid level is below the surface of the high strength forged steel at a distance of one quarter of a thickness thereof. A difference between a peak value of a crystal grain size distribution at the near-surface level and a peak value of the crystal grain size distribution at the mid level is greater than or equal to 10 µm and less than or equal to 30 µm. For the high strength forged steel, it is preferred that the total index as determined in accordance with DIN 50602-1985, method K0 for evaluating non-metallic inclusions is less than or equal to 10.

## Description

### TECHNICAL FIELD

The present invention relates to a high strength forged steel and a large forged component.

### BACKGROUND ART

Steel materials that are used to obtain components of diesel engines for vessels or diesel engines for power generation are required to have high fatigue strength in order to achieve higher engine outputs and to make the engines more compact. Such components are typically produced by forging a high strength forged steel, which greatly deforms under a heat treatment due to its tensile strength being as great as or more than 850 MPa. Thus, the process of forming the steel into final shape by, for example, centering and machining, is time-consuming, resulting in reduced productivity.

A NiCrMo-based high strength steel has been developed as a high strength forged steel for a large forged component having a strength of 850 MPa or more, and is used to produce, for example, crank shafts that are for use in diesel engines for vessels and are to bear a heavy load (see Patent Documents 1 to 3).

The steel for large crankshafts to be used to transmit driving force in vessels or the like is subjected, after forging and a heat treatment, to machining such as cutting for forming the steel into final shape. In this process, ease of finishing is required.

However, it has been difficult to achieve both a high toughness of 850 MPa or more and enhanced finishability after the heat treatment because the cutting resistance typically increases proportionally to the strength (hardness) of the material.

The present invention was made in view of the disadvantage, and has an object to provide a high strength forged steel and a large forged component that have high toughness and exhibit enhanced finishability after the heat treatment.

### PRIOR ART DOCUMENTS

### Patent Documents

Patent Document 1: Japanese Unexamined Patent Application, Publication No. 2002-241892
Patent Document 2: Japanese Unexamined Patent Application, Publication No. 2004-211206
Patent Document 3: Japanese Unexamined Patent Application, Publication No. 2005-344149

### SUMMARY OF THE INVENTION

An aspect of the invention made for solving the aforementioned problem is a high strength forged steel for use in producing a large forged product. The high strength forged steel comprises composition which comprises (consists of) C: greater than or equal to 0.40% by mass and less than or equal to 0.60% by mass, Si: greater than or equal to 0.05% by mass and less than or equal to 0.40% by mass, Mn: greater than or equal to 0.70% by mass and less than or equal to 1.20% by mass, Cu: greater than or equal to 0% by mass and less than or equal to 0.50% by mass, Ni: greater than or equal to 0.40% by mass and less than or equal to 1.00% by mass, Cr: greater than or equal to 1.00% by mass and less than or equal to 2.00% by mass, Mo: greater than or equal to 0.20% by mass and less than or equal to 0.50% by mass, V: greater than or equal to 0.05% by mass and less than or equal to 0.30% by mass, Al: greater than or equal to 0.020% by mass and less than or equal to 0.060% by mass, N: greater than or equal to 0.0040% by mass and less than or equal to 0.0080% by mass, O: greater than 0 ppm and less than or equal to 30 ppm, and a balance being Fe and inevitable impurities. A major constituent of a metallographic structure of the high strength forged steel comprises bainite, martensite or a combination thereof. An average crystal grain size in steel microstructures between a near-surface level and a mid level is less than or equal to 50 µm. The near-surface level is below a surface of the high strength forged steel at a distance of 5 mm and the mid level is below the surface of the high strength forged steel at a distance of one quarter of a thickness thereof. A difference between a peak value of a crystal grain size distribution at the near-surface level and a peak value of the crystal grain size distribution at the mid level is greater than or equal to 10 µm and less than or equal to 30 µm.

### DESCRIPTION OF THE EMBODIMENTS

The present inventor conducted extensive research in pursuit of optimal microstructural forms with a view to achieving conflicting characteristics, namely, the higher strength and the enhanced finishability after the heat treatment. The present inventor consequently found that adjusting the crystal grain size was important in order to achieve both the higher strength and the enhanced finishability in relation to, for example, deformability under a heat treatment.

An embodiment of the present invention made on the basis of these findings is a high strength forged steel for use in producing a large forged product. The high strength forged steel comprises composition which comprises (consists of) C: greater than or equal to 0.40% by mass and less than or equal to 0.60% by mass, Si: greater than or equal to 0.05% by mass and less than or equal to 0.40% by mass, Mn: greater than or equal to 0.70% by mass and less than or equal to 1.20% by mass, Cu: greater than or equal to 0% by mass and less than or equal to 0.50% by mass, Ni: greater than or equal to 0.40% by mass and less than or equal to 1.00% by mass, Cr: greater than or equal to 1.00% by mass and less than or equal to 2.00% by mass, Mo: greater than or equal to 0.20% by mass and less than or equal to 0.50% by mass, V: greater than or equal to 0.05% by mass and less than or equal to 0.30% by mass, Al: greater than or equal to 0.020% by mass and less than or equal to 0.060% by mass, N: greater than or equal to 0.0040% by mass and less than or equal to 0.0080% by mass, O: greater than 0 ppm and less than or equal to 30 ppm, and a balance being Fe and inevitable impurities. The major constituent of the metallographic structure of the high strength forged steel comprises bainite, martensite or a combination thereof. The average crystal grain size in steel microstructures between a near-surface level and a mid level is less than or equal to 50 µm. The near-surface level is below the surface of the high strength forged steel at a distance of 5 mm and the mid level is below the surface of the high strength forged steel at a distance of one quarter of the thickness thereof. The difference between the peak value of the crystal grain size distribution at the near-surface level and the peak value of the crystal grain size distribution at the mid level is greater than or equal to 10 µm and less than or equal to 30 µm.

The high strength forged steel having the aforementioned composition according to the embodiment of the present invention and the large forged component formed from the high strength forged steel have high strength and offer advantages that they are less prone to deformation after the heat treatment and that a reduction in the processing time for forming the steel into final shape is enabled accordingly.

The high strength steel and the large forged component according the embodiments of the present invention will be described below in detail.

### Large Forged Component

A large forged component according to another embodiment of the present invention is obtained by forging the high strength forged steel, which will be described below, and examples thereof include large crankshafts for vessels and other members such as intermediate shafts, propeller shafts, connecting rods, rudder components, and the like.

### High Strength Forged Steel

The high strength forged steel according to the present embodiment is for use in producing a large forged product. The major constituent of the metallographic structure of the high strength forged steel comprises bainite, martensite or a combination thereof. Due to the major constituent of the metallographic structure comprising bainite, martensite or a combination thereof, the high strength forged steel for forged products according to the present embodiment has high strength. The lower limit of the area fraction of the metallographic structure having the above-mentioned major constituent is preferably 95 area%, more preferably 98 area%, and still more preferably 100 area%. The area fraction of bainite, martensite or a mixed microstructure of bainite and martensite may be determined by: photographing, using an optical microscope, a cross section of the high strength steel for forged products having undergone nital etching; making visual observation of the obtained micrographs to differentiate beinaite, martensite or the mixed microstructure of bainite and martensite from other metallographic structures; and calculating area ratios of the metallographic structures.

For improved fatigue characteristics, the high strength forged steel according to the present embodiment may include a surface-treated layer such as a nitrided layer, a carburized layer, an induction hardened layer, a shot peened layer, or a cold worked layer. That is, the surface of the high strength forged steel according to the present embodiment may be treated with nitriding, carburization, induction hardening, shot peening, cold working, or the like.

The high strength forged steel according to the present embodiment comprises composition which comprises (consists of)
C (carbon): greater than or equal to 0.40% by mass and less than or equal to 0.60% by mass,
Si (silicon): greater than or equal to 0.05% by mass and less than or equal to 0.40% by mass,
Mn (manganese): greater than or equal to 0.70% by mass and less than or equal to 1.20% by mass,
Cu (copper): greater than or equal to 0% by mass and less than or equal to 0.50% by mass,
Ni (nickel): greater than or equal to 0.40% by mass and less than or equal to 1.00% by mass,
Cr (chromium): greater than or equal to 1.00% by mass and less than or equal to 2.00% by mass,
Mo (molybdenum): greater than or equal to 0.20% by mass and less than or equal to 0.50% by mass,
V (vanadium): greater than or equal to 0.05% by mass and less than or equal to 0.30% by mass,
Al (aluminum): greater than or equal to 0.020% by mass and less than or equal to 0.060% by mass,
N (nitrogen): greater than or equal to 0.0040% by mass and less than or equal to 0.0080% by mass,
O (oxygen): greater than 0 ppm and less than or equal to 30 ppm, and
a balance being Fe (iron) and inevitable impurities.

### C Content

C contributes to enhanced hardenability and increased strength. The required amount of C to be contained for sufficient strength and hardenability is greater than or equal to 0.04% by mass. In the case where the C content is excessively high, an extreme drop in toughness may occur, and inverted V segregation in large ingots may be promoted, leading to a decrease in toughness. Thus, the C content is preferably less than or equal to 0.60% by mass. The lower limit of the C content is preferably 0.45% by mass, and the upper limit thereof is preferably 0.55% by mass.

### Si Content

Si is a deoxidizing element. The required amount of Si to be contained for elicitation of sufficient deoxidation effects is greater than or equal to 0.05% by mass. It is to be noted that the Si content needs to be less than or equal to 0.40% by mass; otherwise Si may promote segregation and adversely affect the toughness. The upper limit of the Si content is preferably 0.30% by mass, and more preferably 0.20% by mass.

### Mn content

Similarly to C, Mn contributes to increased strength while enhancing hardenability. The required amount of Mn to be contained for sufficient strength and hardenability and for inhibition of reductions in variability of the crystal grain size is equal to or greater than 0.70% by mass. In the case where the Mn content is excessively high, inverted V segregation may be promoted, and the toughness may be adversely affected accordingly. Thus, the Mn content needs to be less than or equal to 1.20% by mass, and is more preferably less than or equal to 1.00% by mass.

### Cu Content

Cu is effective at enhancing hardenability, and may be added as needed. The required amount of Cu to be contained for effective elicitation of the effect is preferably greater than or equal to 0.10% by mass. In the case where the Cu content is excessively high, the toughness and machinability may be degraded. Thus, the upper limit of the Cu content is 0.50% by mass.

### Ni Content

Ni is effective at enhancing strength and toughness. The required amount of Ni to be contained is greater than or equal to 0.40% by mass. In the case where the Ni content is greater than 1.00% by mass, the toughness may be adversely affected. Thus, the Ni content is less than or equal to 1.00% by mass. The lower limit of the Ni content is preferably 0.50% by mass, and more preferably 0.55% by mass. The upper limit of the Ni content is preferably 0.90% by mass, and more preferably 0.80% by mass.

### Cr Content

Cr is effective at enhancing hardenability and improving toughness. The required amount of Cr to be contained for improved hardenability and toughness is equal to or greater than 1.00% by mass. In the case where the Cr content is excessively high, inverted V segregation may be promoted, and the toughness may be adversely affected accordingly. Thus, the Cr content needs to be less than or equal to 2.00% by mass. The lower limit of the Cr content is preferably 1.50% by mass, and the upper limit of the Cr content is preferably 1.80% by mass.

### Mo Content

Mo is effective at improving hardenability, strength and toughness. The required amount of Mo to be contained for effective elicitation of these effects is greater than or equal to 0.20% by mass. In the case where the Mo content is less than 0.20% by mass, inverted V segregation may be promoted. In the case where the Mo content is excessively high, micro-segregation in the steel ingot may be promoted, leading to a decrease in toughness. Mo, which is a heavy element, is likely to induce gravity segregation. Thus, the Mo content needs to be less than or equal to 0.50% by mass. The lower limit of the Mo content is preferably 0.30% by mass, and the upper limit of the Mo content is preferably 0.40% by mass.

### V Content

Even a small amount of V is effective at improving hardenability and strength. The required amount of V to be contained for elicitation of these effects is greater than or equal to 0.05% by mass. In the case where the V content is excessively high, micro-segregation (normal segregation) is likely to occur due to the equilibrium distribution coefficient of V being small, and the toughness may be adversely affected accordingly. Thus, the V content needs to be less than or equal to 0.30% by mass. The upper limit of the V content is preferably 0.20% by mass, and more preferably 0.15% by mass.

### Al Content

Al, which is a deoxdizing element, is effective at reducing the amount of oxygen. The required amount of Al to be contained for effective elicitation of these effects is greater than or equal to 0.020% by mass. In the case where the Al content is excessively high, coarsening of oxides occurs, and the toughness may be adversely affected. Thus, the Al content needs to be less than or equal to 0.060% by mass.

### N Content

N exhibits grain refining properties by forming nitrides, thereby ensuring that the minimum required toughness is at least achieved. The required amount of N to be contained for effective elicitation of these effects is greater than or equal to 0.0040% by mass. In the case where the N content is excessively high, the toughness and machinability may be adversely affected. Thus, the upper limit of the N content is 0.0080% by mass. The upper limit of the N content is preferably 0.0070% by mass, and more preferably 0.0060% by mass.

### O Content

O is contained as an inevitable impurity, and is present in the form of oxides in the steel. In the case where the O content is greater than 30 ppm, coarse oxides may be generated, leading to poor machinability. Thus, the upper limit of the O content is 30 ppm. The upper limit of the O content is preferably 15 ppm, and more preferably 10 ppm.

### Balance

The above-mentioned elements are contained as specified in the present embodiment, with the balance being iron and inevitable impurities. Examples of permissible inevitable impurities that may be mixed into the steel include elements such as tin (Sn), arsenic (As), lead (Pb) and titanium (Ti) that can be mixed in depending on circumstances as to, for example, starting materials, other materials, and production equipment. Furthermore, it may be effective to intentionally add other elements, which will be described below. The characteristics of the high strength forged steel material are further improved depending on the type of the added element (chemical component).

Niobium (Nb) and boron (B) are elements effective at enhancing hardenability, and may be added as needed. However, adding excessive amounts of Nb and/or B undermines the toughness and machinability. Thus, the Nb content is less than or equal to 0.50% by mass, and the B content is less than or equal to 30 ppm.

For the high strength forged steel according to the present embodiment, it is preferred that the total index as determined in accordance with DIN 50602-1985, method K0 for evaluating non-metallic inclusions is less than or equal to 10. Upon fulfillment of this condition, the purity of the high strength forged steel according to the present embodiment is increased, and the durability thereof is also increased accordingly.

For the high strength forged steel according to the present embodiment, the average crystal grain size in steel microstructures between the near-surface level and the mid level is less than or equal to 50 µm. In the present embodiment, the term "near-surface level" means the level below the surface of the high strength forged steel at a distance of 5 mm. The term "mid level" means the level below the surface of the high strength forged steel at a distance of one quarter of the thickness thereof. In the case where the high strength forged steel according to the present embodiment has a circular cross section, for example, the mid level refers to the level below the surface of the high strength forged steel at a distance of one quarter of the diameter thereof. The average crystal grain size in the steel microstructures at the near-surface level and the average crystal grain size in the steel microstructures at the mid level may be used as the basis for determining whether the average crystal grain size in the steel microstructures between the near-surface level and the mid level is less than or equal to 50 µm. In the case where the value obtained by averaging the average crystal grain size in the steel microstructures at the near-surface level and the average crystal grain size in the steel microstructures at the mid level is less than or equal to 50 µm, it may be determined that the average crystal grain size in the steel microstructures between the near-surface level and the mid level is less than or equal to 50 µm.

The average crystal grain size in the steel microstructures at the near-surface level and the average crystal grain size in the steel microstructures at the mid level are determined in accordance with the linear intercept method on the basis of images of the metallographic structures captured by an optical microscope.

For the high strength forged steel according to the present embodiment, the difference between the peak value of the crystal grain size distribution at the near-surface level and the peak value of the crystal grain size distribution at the mid level is greater than or equal to 10 µm and less than or equal to 30 µm. The lower limit of the difference is more preferably 14 µm, and still more preferably 18 µm. The upper limit of the difference is more preferably 27 µm, and still more preferably 25 µm. In the case where the difference falls within the above range, the high strength forged steel according to the present embodiment has high strength and is less prone to deformation after the heat treatment.

Given that the relationship between a predetermined range of crystal grain size and the number of crystal grains within the range is represented by a histogram, the peak value of the crystal grain size distribution at the near-surface level and the peak value of the crystal grain size distribution at the mid level each refer to the crystal grain size represented by the bin to which the largest number of crystal grains belong to (the intermediate value of the crystal grain sizes within the predetermined range). Specifically, the crystal grains are grouped into bins based on their sizes in increments of 1 µm, and the crystal grains in each bin (a predetermined range of crystal grain size) are counted. The peak value may be defined as the intermediate value of the sizes of crystal grains in the bin to which the largest number of crystal grains belong.

The crystal grain size of each crystal is determined by: performing image analysis on the metallographic structure photographed using the optical microscope to measure the centroid diameter of the crystal and to measure the area surrounded by the interface of the crystal; and converting the obtained values into an equivalent circle diameter.

For the production of the high strength forged steel material according to the present embodiment, the steel having the above-mentioned chemical composition is smelted according to a common smelting method, and then, the smelted steel is cooled to obtain slabs. After being subjected to heating, for example, to a temperature range from 1,200 °C to 1,250 °C, the slabs are subjected to hot forging. Subsequently, the slabs are forged in such a manner that the cumulative rolling reduction rate in a temperature range from 1,050 °C to 950 °C is greater than or equal to 10% and less than or equal to 30%, and then, are forged in such a manner that the cumulative rolling reduction rate within a temperature range from 950 °C to 800 °C is greater than or equal to 5% and less than or equal to 10%, whereby the forging is ended. The steel needs to be cooled from the heating temperature for hardening to 400 °C at an average cooling rate within a range of 0.1 °C/sec to 20 °C/sec. The basis for setting these range requirements for the method will be described below. The above-mentioned temperatures are controlled based on the surface temperature.

### [Heating temperature for forging being higher than or equal to 1,200 °C and lower than or equal to 1,250 °C]

The temperature for forging needs to be greater than or equal to 1,200 °C in view of the need for austenizing initially all of the microstructures of the high strength forged steel. In the case where the heating temperature is higher than 1,250 °C, austenite grains are coarsened, making it difficult to obtain desired microstructures in downstream processes. In the case where the heating temperature for forging is much lower than 1,200 °C, a mixed grain structure is formed. Thus, the heating temperature for forging is preferably higher than or equal to 1,200 °C and lower than or equal to 1,250 °C.

### [Cumulative rolling reduction rate in a temperature range from 1,050 °C to 950 °C being greater than or equal to 10% and less than or equal to 30%]

In the case where the cumulative rolling reduction rate in this temperature range is greater than or equal to 10% and less than or equal to 30%, appropriate crystal grain sizes are achieved. In the case where the temperature range falls outside this range or in the case where the cumulative rolling reduction rate is less than 10% or greater than 30%, the microstructures are coarsened, and sufficient toughness may not be achieved accordingly.

### [Cumulative rolling reduction rate in a temperature range from 950 °C to 800 °C being greater than or equal to 5% and less than or equal to 10%]

In the case where the cumulative rolling reduction rate in the final rolling pass is greater than or equal to 5% and less than or equal to 10%, the crystal grain size distribution in the vicinity of the surface (at a distance of 5 mm from the surface) is controllable. In the common forging process, the steel is typically rolled at a rolling reduction rate of about 1.2% in the final rolling pass. Such a rolling reduction rate may yield one local maximum point (peak) of the crystal grain size distribution at which the number of crystal grains is maximized, or may yield two or more local maximum points, which represent relatively similar grain sizes. In contrast, the conscious choice of a lower rolling reduction rate in the final rolling pass rather yields variations in the crystal grain size in the vicinity of the surface, and two local maximum points of the crystal grain size distribution at which the number of crystal grains is maximized, with the difference in the crystal size between the two local maximum points being greater than or equal to 10 µm and less than or equal to 30 µm. The crystal grain size distribution between the near-surface level and the mid level is accordingly controllable.

Various modes of techniques have been disclosed herein. Of these, principal techniques will be summarized below.

The one embodiment of the invention made for solving the aforementioned problem is a high strength forged steel for use in producing a large forged product. The high strength forged steel comprises composition which comprises (consists of) C: greater than or equal to 0.40% by mass and less than or equal to 0.60% by mass, Si: greater than or equal to 0.05% by mass and less than or equal to 0.40% by mass, Mn: greater than or equal to 0.70% by mass and less than or equal to 1.20% by mass, Cu: greater than or equal to 0% by mass and less than or equal to 0.50% by mass, Ni: greater than or equal to 0.40% by mass and less than or equal to 1.00% by mass, Cr: greater than or equal to 1.00% by mass and less than or equal to 2.00% by mass, Mo: greater than or equal to 0.20% by mass and less than or equal to 0.50% by mass, V: greater than or equal to 0.05% by mass and less than or equal to 0.30% by mass, Al: greater than or equal to 0.020% by mass and less than or equal to 0.060% by mass, N: greater than or equal to 0.0040% by mass and less than or equal to 0.0080% by mass, O: greater than 0 ppm and less than or equal to 30 ppm, and a balance being Fe and inevitable impurities. The major constituent of the metallographic structure of the high strength forged steel comprises bainite, martensite or a combination thereof. The average crystal grain size in steel microstructures between the near-surface level and the mid level is less than or equal to 50 µm. The near-surface level is below the surface of the high strength forged steel at a distance of 5 mm and the mid level is below the surface of the high strength forged steel at a distance of one quarter of the thickness thereof. The difference between the peak value of the crystal grain size distribution at the near-surface level and the peak value of the crystal grain size distribution at the mid level is greater than or equal to 10 µm and less than or equal to 30 µm.

According to the embodiment of the present invention, adjusting the characteristics such as the composition and the microstructures, more specifically, adjusting the crystal grain size between the near-surface level and the mid level, imparts high strength to the steel, and makes the steel less prone to deformation after the heat treatment, thereby shortening the processing time for forming the steel into final shape.

For the high strength forged steel, it is preferred that the total index as determined in accordance with DIN 50602-1985, method K0 for evaluating non-metallic inclusions is less than or equal to 10. Upon fulfillment of this condition, the purity of the high strength forged steel is increased, and the durability thereof is also increased accordingly.

The large forged component according to the another embodiment of the present invention is formed from the high strength forged steel mentioned above. Thus, the large forged component according to the another embodiment of the present invention has high strength, and a reduction in the processing time for the production of the large forged component is enabled. Examples of the large forged component include workpieces for members of large vessels such as large crank shafts, intermediate shafts, propeller shafts, connecting rods, and rudder components.

### EXAMPLES

The embodiments of the present invention will be described in more detail by way of examples. It is understood that the present invention is not to be limited to the following examples, and that appropriate modifications can be made within the applicable scope of the present invention, and fall within the technical scope of the present invention.

### Preparation of Forged Steel

Various kinds of smelted steels having the composition shown in Table 1 were prepared by a common smelting method, and each kind of smelted steels was cooled to yield 100 tons of steel ingot. A riser portion of each steel ingot was cut off, and then the ingot was heated to the temperature shown in Table 2, for 5 to 10 hours. Thereafter, the steel ingot was rolled at a predetermined cumulative compression ratio by using an open-die forging press. After being left to cool to room temperature in the atmosphere, each workpiece was maintained in the temperature range of 550 °C to 650 °C for 10 hours or more (it is to be noted that the rate of temperature elevation at 500 °C or above was less than or equal to 50 °C/hr). Then, the workpiece was subjected to furnace cooling before undergoing a quenching process. Thereafter, the quenching process was carried out in a heat treat furnace. In the quenching process, the temperature of the workpiece was elevated to 870 °C at a rate of 50 °C/hr, and was maintained at the temperature for 4 hours. Thereafter, each workpiece was allowed to cool at an average cooling rate of 10 °C/min (as measured at the center position) in the temperature range from 870 °C to 500 °C, whereby the forged steels No. 1 to No. 33 were obtained. In the quenching process, the temperature of each workpiece was elevated to 870 °C at a rate of 50 °C/hr, and was maintained at the temperature for 4 hours in the temperature range from 870 °C to 500 °C. Thereafter, each workpiece was allowed to cool at an average cooling rate of 20 °C/min (as measured at the center position), in the temperature range from 870 °C to 500 °C. Each workpiece was rolled at the "rolling reduction rate 1" in Table 2, which was the cumulative rolling reduction rate in the temperature range of 1,050 °C to 950 °C, and then each workpiece was rolled at the "rolling reduction rate 2" in Table 2, which was the cumulative rolling reduction rate in the temperature range of 950 °C to 800 °C. It is to be noted that "DIN KO" in Table 1 refers to the total index as determined in accordance with DIN 50602-1985, method K0 for evaluating non-metallic inclusions.

**Table 1**

| No. | Category | C | Si | Mn | P | S | Cu | Ni | Cr | Mo | V | Al | N | O | DIN K0 |
|---|---|---|---|---|---|---|---|---|---|---|---|---|---|---|---|
| 1 | Example | 0.52 | 0.30 | 0.80 | 0.004 | 0.003 | 0 | 0.50 | 1.20 | 0.32 | 0.11 | 0.025 | 60 | 20 | 18 |
| 2 | Example | 0.53 | 0.30 | 0.80 | 0.004 | 0.003 | 0 | 0.50 | 1.20 | 0.32 | 0.11 | 0.025 | 60 | 15 | 13 |
| 3 | Example | 0.46 | 0.30 | 0.80 | 0.004 | 0.003 | 0 | 0.50 | 1.20 | 0.32 | 0.11 | 0.025 | 60 | 10 | 8 |
| 4 | Example | 0.51 | 0.30 | 0.80 | 0.004 | 0.003 | 0 | 0.50 | 1.20 | 0.32 | 0.11 | 0.025 | 60 | 8 | 6 |
| 5 | Example | 0.49 | 0.30 | 0.80 | 0.004 | 0.003 | 0 | 0.50 | 1.20 | 0.32 | 0.11 | 0.025 | 60 | 5 | 3 |
| 6 | Comparative Example | 0.35 | 0.10 | 0.80 | 0.003 | 0.003 | 0 | 0.47 | 1.15 | 0.32 | 0.15 | 0.025 | 60 | 20 | 18 |
| 7 | Comparative Example | 0.62 | 0.20 | 0.81 | 0.004 | 0.003 | 0 | 0.50 | 1.22 | 0.30 | 0.11 | 0.026 | 60 | 20 | 18 |
| 8 | Comparative Example | 0.55 | 0.02 | 0.90 | 0.004 | 0.002 | 0 | 0.52 | 1.20 | 0.32 | 0.12 | 0.025 | 60 | 20 | 17 |
| 9 | Comparative Example | 0.52 | 0.45 | 0.90 | 0.004 | 0.002 | 0 | 0.50 | 1.20 | 0.35 | 0.11 | 0.025 | 60 | 20 | 17 |
| 10 | Comparative Example | 0.55 | 0.10 | 0.60 | 0.004 | 0.003 | 0 | 0.55 | 1.18 | 0.32 | 0.11 | 0.025 | 60 | 20 | 18 |
| 11 | Comparative Example | 0.53 | 0.30 | 1.30 | 0.004 | 0.003 | 0 | 0.50 | 1.20 | 0.33 | 0.11 | 0.025 | 60 | 20 | 18 |
| 12 | Comparative Example | 0.51 | 0.20 | 0.80 | 0.004 | 0.003 | 0.55 | 0.50 | 1.15 | 0.34 | 0.21 | 0.025 | 60 | 20 | 18 |
| 13 | Comparative Example | 0.52 | 0.10 | 0.80 | 0.004 | 0.003 | 0 | 0.35 | 1.20 | 0.32 | 0.11 | 0.025 | 60 | 20 | 18 |
| 14 | Comparative Example | 0.55 | 0.30 | 0.81 | 0.003 | 0.002 | 0 | 1.10 | 1.20 | 0.33 | 0.15 | 0.023 | 60 | 20 | 17 |
| 15 | Comparative Example | 0.52 | 0.20 | 0.80 | 0.004 | 0.003 | 0 | 0.47 | 0.90 | 0.32 | 0.11 | 0.025 | 60 | 20 | 18 |
| 16 | Comparative Example | 0.55 | 0.10 | 0.82 | 0.004 | 0.003 | 0 | 0.50 | 2.10 | 0.32 | 0.17 | 0.027 | 60 | 20 | 18 |
| 17 | Comparative Example | 0.53 | 0.30 | 0.80 | 0.003 | 0.002 | 0 | 0.52 | 1.22 | 0.18 | 0.11 | 0.025 | 60 | 20 | 17 |
| 18 | Comparative Example | 0.51 | 0.20 | 0.78 | 0.004 | 0.003 | 0 | 0.50 | 1.20 | 0.55 | 0.11 | 0.022 | 60 | 20 | 18 |
| 19 | Comparative Example | 0.52 | 0.10 | 0.80 | 0.004 | 0.002 | 0 | 0.55 | 1.20 | 0.32 | 0.04 | 0.025 | 60 | 20 | 17 |
| 20 | Comparative Example | 0.55 | 0.30 | 0.83 | 0.003 | 0.003 | 0 | 0.47 | 1.18 | 0.35 | 0.31 | 0.025 | 60 | 20 | 18 |
| 21 | Comparative Example | 0.52 | 0.20 | 0.80 | 0.004 | 0.002 | 0 | 0.50 | 1.20 | 0.32 | 0.11 | 0.015 | 60 | 20 | 17 |
| 22 | Comparative Example | 0.55 | 0.10 | 0.80 | 0.004 | 0.003 | 0 | 0.52 | 1.15 | 0.33 | 0.13 | 0.065 | 60 | 20 | 18 |
| 23 | Comparative Example | 0.53 | 0.30 | 0.80 | 0.004 | 0.002 | 0 | 0.50 | 1.20 | 0.34 | 0.11 | 0.025 | 35 | 20 | 17 |
| 24 | Comparative Example | 0.51 | 0.20 | 0.80 | 0.004 | 0.003 | 0 | 0.55 | 1.22 | 0.32 | 0.15 | 0.025 | 85 | 20 | 18 |
| 25 | Comparative Example | 0.52 | 0.30 | 0.80 | 0.004 | 0.002 | 0 | 0.50 | 1.20 | 0.32 | 0.11 | 0.025 | 60 | 35 | 32 |
| 26 | Comparative Example | 0.55 | 0.30 | 0.80 | 0.004 | 0.003 | 0 | 0.50 | 1.20 | 0.32 | 0.11 | 0.025 | 60 | 10 | 8 |
| 27 | Comparative Example | 0.52 | 0.10 | 0.82 | 0.004 | 0.003 | 0 | 0.48 | 1.15 | 0.35 | 0.15 | 0.025 | 60 | 10 | 8 |
| 28 | Comparative Example | 0.55 | 0.30 | 0.80 | 0.004 | 0.003 | 0 | 0.50 | 1.20 | 0.32 | 0.11 | 0.025 | 60 | 10 | 8 |
| 29 | Comparative Example | 0.53 | 0.20 | 0.78 | 0.004 | 0.003 | 0 | 0.52 | 1.22 | 0.33 | 0.12 | 0.025 | 60 | 10 | 8 |
| 30 | Comparative Example | 0.51 | 0.30 | 0.80 | 0.004 | 0.003 | 0 | 0.50 | 1.20 | 0.32 | 0.11 | 0.025 | 60 | 10 | 8 |
| 31 | Comparative Example | 0.52 | 0.30 | 0.80 | 0.004 | 0.003 | 0 | 0.50 | 1.21 | 0.35 | 0.11 | 0.025 | 60 | 10 | 8 |
| 32 | Comparative Example | 0.34 | 0.22 | 0.98 | 0.007 | 0.003 | 0.04 | 1.58 | 1.59 | 0.49 | 0.16 | 0.020 | 60 | 60 | 58 |
| 33 | Comparative Example | 0.35 | 0.08 | 0.35 | 0.015 | 0.003 | 0 | 3.00 | 1.60 | 0.45 | 0.10 | 0.025 | 60 | 60 | 58 |

**Table 2**

| No. | Category | Heating (°C) | Rolling Reduction Rate 1 (%) | Rolling Reduction Rate 2 (%) | Average Grain Size (µm) | Difference between Values of Peak Crystal Grain Sizes (µm) | Tensile Strength (MPa) | Toughness (J) | Amount of Deformation (mm) | Endurance Ratio |
|---|---|---|---|---|---|---|---|---|---|---|
| 1 | Example | 1,230 | 12 | 7 | 47 | 22 | 999 | 95 | 0.04 | 0.46 |
| 2 | Example | 1,230 | 13 | 7 | 45 | 20 | 1,009 | 94 | 0.04 | 0.47 |
| 3 | Example | 1,230 | 13 | 7 | 45 | 20 | 937 | 101 | 0.04 | 0.50 |
| 4 | Example | 1,230 | 13 | 7 | 47 | 22 | 989 | 96 | 0.05 | 0.51 |
| 5 | Example | 1,230 | 13 | 7 | 45 | 20 | 968 | 98 | 0.05 | 0.52 |
| 6 | Comparative Example | 1,230 | 13 | 7 | 45 | 20 | 800 | 119 | 0.05 | Not determined |
| 7 | Comparative Example | 1,230 | 13 | 7 | 45 | 20 | 1,108 | 23 | 0.04 | Not determined |
| 8 | Comparative Example | 1,230 | 13 | 7 | 46 | 21 | 1,064 | 25 | 0.05 | Not determined |
| 9 | Comparative Example | 1,230 | 13 | 7 | 44 | 19 | 994 | 25 | 0.03 | Not determined |
| 10 | Comparative Example | 1,230 | 13 | 7 | 47 | 22 | 890 | 40 | 0.05 | Not determined |
| 11 | Comparative Example | 1,230 | 13 | 7 | 46 | 21 | 1,029 | 40 | 0.05 | Not determined |
| 12 | Comparative Example | 1,230 | 13 | 7 | 48 | 23 | 1.080 | 27 | 0.04 | Not determined |
| 13 | Comparative Example | 1,230 | 13 | 7 | 44 | 19 | 880 | 27 | 0.05 | Not determined |
| 14 | Comparative Example | 1,230 | 13 | 7 | 45 | 20 | 1,095 | 45 | 0.04 | Not determined |
| 15 | Comparative Example | 1.230 | 13 | 7 | 46 | 21 | 875 | 109 | 0.05 | Not determined |
| 16 | Comparative Example | 1,230 | 13 | 7 | 43 | 18 | 1,124 | 27 | 0.04 | Not determined |
| 17 | Comparative Example | 1,230 | 13 | 7 | 46 | 21 | 879 | 108 | 0.05 | Not determined |
| 18 | Comparative Example | 1,230 | 13 | 7 | 47 | 22 | 1,014 | 31 | 0.05 | Not determined |
| 19 | Comparative Example | 1,230 | 13 | 7 | 42 | 17 | 868 | 109 | 0.04 | Not determined |
| 20 | Comparative Example | 1,230 | 13 | 7 | 44 | 19 | 1,199 | 24 | 0.05 | Not determined |
| 21 | Comparative Example | 1,230 | 13 | 7 | 45 | 20 | 1,006 | 28 | 0.04 | Not determined |
| 22 | Comparative Example | 1,230 | 13 | 7 | 45 | 20 | 1,062 | 36 | 0.05 | Not determined |
| 23 | Comparative Example | 1,230 | 13 | 7 | 44 | 19 | 1,011 | 28 | 0.04 | Not determined |
| 24 | Comparative Example | 1,230 | 13 | 7 | 43 | 18 | 1,033 | 36 | 0.05 | Not determined |
| 25 | Comparative Example | 1,230 | 13 | 7 | 44 | 19 | 999 | 28 | 0.05 | Not determined |
| 26 | Comparative Example | 1,170 | 13 | 7 | 48 | 40 | 1,030 | 24 | 0.12 | Not determined |
| 27 | Comparative Example | 1,270 | 13 | 7 | 60 | Not determined | 1,048 | 25 | 0.15 | Not determined |
| 28 | Comparative Example | 1,230 | 8 | 7 | 62 | Not determined | 1,030 | 24 | 0.11 | Not determined |
| 29 | Comparative Example | 1,230 | 17 | 7 | 58 | Not determined | 1,027 | 25 | 0.13 | Not determined |
| 30 | Comparative Example | 1,230 | 13 | 4 | 45 | 40 | 989 | 25 | 0.13 | Not determined |
| 31 | Comparative Example | 1,230 | 13 | 12 | 45 | 40 | 1,002 | 25 | 0.12 | Not determined |
| 32 | Comparative Example | 1,230 | 12 | 7 | 47 | 22 | 950 | 42 | Not determined | 0.43 |
| 33 | Comparative Example | 1,230 | 12 | 7 | 47 | 22 | 965 | 45 | Not determined | 0.42 |

### Crystal Grain Size

For each of the forged steels No. 1 to No. 33 that had been obtained as described above and had a thickness of 450 mm, the average crystal grain size between the near-surface level and the mid level (the "average crystal grain size" in Table 2) and the difference between the value of the peak crystal grain size at the near-surface level and the value of the peak crystal grain size at the mid level (the "difference between values of peak crystal grain sizes" in Table 2) were determined. The average crystal grain size between the near-surface level and the mid level and the difference between the value of the peak crystal grain size at the near-surface level and the value of the peak crystal grain size at the mid level may be determined on the basis of images taken by an optical microscope, of cross sections of the test pieces collected at the near-surface level and the mid level. An example of the specific procedure for obtaining such images is as follows.

(1) Each test piece was embedded in a resin in the following procedure. Vaseline was applied to SeriForm (a mold formed from a yellow resin).
(2) SpeciFix-20 was used as a resin. The resin and a hardener were mixed in the weight ratio of 7 to 1. The mixture of the resin and the hardener was sufficiently stirred until smooth.
(3) Once the resin was hardened, a specimen was removed from SeriForm, and Vaseline was wiped off the surface of the specimen.
(4) The specimen was polished with a specimen polisher to mirror-finish the test piece embedded in the resin.
(5) A corrosive liquid was prepared. A nital corrosion liquid was prepared by mixing 3 ml of nitric acid and 97 ml of ethanol, and was stirred thoroughly before being subjected to use.
(6) Nital was applied to the mirror-finished specimen to allow the metallographic structure to manifest itself. Upon the application of nital, the microstructures started to corrode (manifested itself). Then, the specimen was washed with ethanol.
(7) The metallographic structure having manifested itself were photographed using an optical microscope.

### Evaluation of Forged Steel

Each of the forged steels No. 1 to No. 33 was evaluated for the tensile strength, the toughness, the amount of deformation after the heat treatment, and the endurance ratio. The endurance ratio was calculated as the ratio of fatigue strength to tensile strength.

### Method for Determining Mechanical Properties

### (A) Tensile Strength

Each steel material was subjected to a tensile test in accordance with JIS-Z2241 (2011). The test pieces each had the shape of the No. 14 test piece (ϕ6 × G. 30) specified in JIS-Z2201 (2011) for determination of tensile strength (TS). In this test, the tensile strength was determined to be "favorable" in the case of being greater than or equal to 1,050 MPa, and was determined to be "unfavorable" in the case of being less than 900 MPa.

### (B) Toughness

Each steel material was subjected to the Charpy impact test. The Charpy impact test was carried out in accordance with JIS-Z2242 (2005) to determine vE-20 (energy absorption at room temperature). The test pieces each had a 2 mm V-notch specified in JIS-Z2202 (2005) for determination of toughness. In this test, the toughness was determined to be "favorable" in the case of being greater than or equal to 45 J at -20 °C, and was determined to be "unfavorable" in the case of being less than 45 J at -20 °C.

### (C) Amount of Deformation after Heat Treatment

For determination of the amount of deformation after the heat treatment, each test piece was placed on a support base to eliminate the amount of elastic deformation. While a clank shaft was rotated, a contact dial gauge was placed against a journal section to measure a runout, which was determined as the amount of deformation after the heat treatment. In this test, the amount of deformation after the heat treatment was determined to be "favorable" in the case of being less than or equal to 0.1 mm, and was determined to be "unfavorable" in the case of being less than 0.1 mm.

As is clear from Table 2, all evaluation items including the tensile strength, the toughness, the amount of deformation after the heat treatment, and the endurance ratio of each of the forged steels No. 1 to No. 5 were determined to be favorable. It is thus conceivable that the forged steels are suitable for the production of, for example, crank shafts to be used as members that transmit drive sources in vessels and the like.

As to each of the forged steels No. 6 to No. 33 of Comparative Examples, however, at least one of the tensile strength, the toughness, the amount of deformation after the heat treatment, and the endurance ratio was determined to be unfavorable. Comparative Examples will be discussed below.

The forged steels No. 6 to No. 25 and the forged steel No. 33 are Comparative Examples that fail to satisfy the range requirements on composition prescribed herein. The forged steels No. 26 to No. 31 are Comparative Examples that fail to satisfy the range requirements on either of the following evaluation items prescribed herein: the average crystal grain size between the near-surface level and the mid level; or the difference between the value of the peak crystal grain size at the near-surface level and the value of the peak crystal grain size at the mid level.

At least one of the tensile strength and the toughness of each of the forged steels No. 6 to No. 25 and the forged steels No. 32 and No. 33 was determined to be unfavorable. The toughness and the amount of deformation after the heat treatment of each of the forged steels No. 26 to No. 31 were determined to be unfavorable.

As is clear from durability comparisons among the forged steels No. 1 to No. 5, No. 32 and No. 33, the forged steels No. 1 to No. 5, the total index of which was less than or equal to 20, were superior in durability to the forged steels No. 32 and No. 33, the total index of which is greater than 20. Furthermore, the forged steels No. 3 to No. 5, the total index of which was less than or equal to 10, were superior in durability.

The present application is based on Japanese Patent Application No. 2016-008334 filed on January 19, 2016, the contents of which are incorporated by reference herein in their entirety.

The present invention has been adequately and sufficiently described above by way of embodiments with reference to the drawings and the like, for the purpose of illustrating the invention. One of ordinary skill in the art should be aware, however, that the embodiments described above can be easily modified and/or improved. It is therefore understood that any modified embodiments or improved embodiments that one of ordinary skilled in the art can arrive at are encompassed within the scope as claimed in the appended claims, as long as these modifications and improvements do not depart from the scope of the claims.

### INDUSTRIAL APPLICABILITY

As described in the foregoing, the high strength large high strength forged steel according to the embodiment of the present invention has high strength and is less prone to deformation after the heat treatment, whereby a reduction in the processing time for forming the steel into final shape is enabled accordingly. Thus, the high strength forged steel may be effectively utilized as workpieces for crank shafts, intermediate shafts, propeller shafts, connecting rods, rudder components to be used as members that transmit drive sources in vessels.

## Claims

1. A high strength forged steel for use in producing a large forged product, the high strength forged steel comprising composition which comprises
C: greater than or equal to 0.40% by mass and less than or equal to 0.60% by mass,
Si: greater than or equal to 0.05% by mass and less than or equal to 0.40% by mass,
Mn: greater than or equal to 0.70% by mass and less than or equal to 1.20% by mass,
Cu: greater than or equal to 0% by mass and less than or equal to 0.50% by mass,
Ni: greater than or equal to 0.40% by mass and less than or equal to 1.00% by mass,
Cr: greater than or equal to 1.00% by mass and less than or equal to 2.00% by mass,
Mo: greater than or equal to 0.20% by mass and less than or equal to 0.50% by mass,
V: greater than or equal to 0.05% by mass and less than or equal to 0.30% by mass,
Al: greater than or equal to 0.020% by mass and less than or equal to 0.060% by mass,
N: greater than or equal to 0.0040% by mass and less than or equal to 0.0080% by mass,
O: greater than 0 ppm and less than or equal to 30 ppm, and
a balance being Fe and inevitable impurities, wherein
a major constituent of a metallographic structure of the high strength forged steel comprises bainite, martensite or a combination thereof,
an average crystal grain size in steel microstructures between a near-surface level and a mid level is less than or equal to 50 µm, wherein the near-surface level is below a surface of the high strength forged steel at a distance of 5 mm and the mid level is below the surface of the high strength forged steel at a distance of one quarter of a thickness thereof, and
a difference between a peak value of a crystal grain size distribution at the near-surface level and a peak value of the crystal grain size distribution at the mid level is greater than or equal to 10 µm and less than or equal to 30 µm.

2. The high strength forged steel according to claim 1, wherein a total index as determined in accordance with DIN 50602-1985, method K0 for evaluating non-metallic inclusions is less than or equal to 10.

3. A large forged component formed from the high strength forged steel according to claim 1 or 2.
